# EUROPEAN PATENT APPLICATION

(11) **EP 0 960 901 A2**
(43) Date of publication of application: **01.12.1999**
(21) Application number: 99304037.7
(22) Date of filing: 25.05.1999
(51) Int. Cl.: C08J 7/04, C09D 129/04

(54) **Gas-barrier laminate film and method for producing same**

(30) Priority: 26.05.1998 JP 14470798; 19.06.1998 JP 17356498; 13.11.1998 JP 32396098
(71) Applicant: The Nakato Laboratory, Inc., Yasu-gun, Shiga-ken (JP)
(72) Inventor: Yoshida, Shigeo, Yasu-gun, Shiga-ken (JP); Morimoto, Masao, Yasu-gun, Shiga-ken (JP); Ikari, Hatsumi, Yasu-gun, Shiga-ken (JP)
(74) Representative: Skailes, Humphrey John

(57) **Abstract**

A gas-barrier laminate film formed by (a) forming a thin, inorganic layer on a surface of a thermoplastic resin substrate film; (b) preparing a coating liquid containing a composite polymer formed by the polycondensation of a metal alkoxide or its hydrolyzate and an ethylenevinyl alcohol copolymer by a sol-gel method; (c) coating and drying the coating liquid on the thin, inorganic layer; and (d) subjecting the resultant composite polymer layer to a heat treatment at 80-150°C, thereby causing the composite polymer layer to bond to a surface of the thin, inorganic layer.

## Description

### BACKGROUND OF THE INVENTION

The present invention relates to a laminate film with excellent gas barrier properties, particularly to a laminate film with excellent resistance to hot water and retaining excellent gas barrier properties even after a boiling or retorting treatment, a method for producing such a laminate film and an article composed of such laminate film.

Thermoplastic resin films, particularly polyester films have excellent mechanical strength, chemical resistance and transparency are inexpensive, finding wide varieties of applications. They are used for base films for photographs and magnetic tapes, drawing films, films for electric devices such as capacitors, membrane switches, touch panels and keyboards, labels, other industrial materials, etc. They are also used for food packaging.

However, polyester films are generally insufficient in gas barrier properties when they are used for food packaging. Accordingly, silica deposition layers, etc. are formed on surfaces of polyester films to impart gas barrier properties thereto. For instance, polyethylene terephthalate (PET) films widely used as polyester films, with or without silica deposition layers, show permeability of oxygen and steam as shown in Table 1.

**Table 1**

| Gas Permeability | | |
|---|---|---|
| PET Film | Oxygen Gas⁽¹⁾ (cc/m²) | Steam⁽²⁾ (g/m²) |
| No Silica Deposition | 130 | 24 |
| Silica-Deposited | 2-3 | 2-3 |

| | | |
|---|---|---|
| Note: (1) The amount of an oxygen gas passing through a 20-µm PET film under 1 atm for 24 hours. | | |
| (2) The amount of steam passing through a 20-µm PET film at 40°C and a relative humidity (RH) of 90% for 24 hours. | | |

Table 1 clearly shows that though PET films have such low gas barrier properties that an oxygen gas and steam permeate them easily, their gas barrier properties are drastically improved by forming silica deposition layers on their surfaces. However, the silica deposition layers do not have enough adhesion to PET films, thus likely to have pinholes and peel off under physical pressure, and they also are relatively poor in flexibility. To compensate such disadvantages of the silica-deposited films, lamination with further films is proposed. However, the lamination with further films is disadvantageous in cost, only with insufficient improvement in gas barrier properties.

### OBJECT AND SUMMARY OF THE INVENTION

Accordingly, an object of the present invention is to provide a laminate film with excellent gas barrier properties and resistance to hot water.

Another object of the present invention is to provide a method for producing such a gas-barrier laminate film.

A further object of the present invention is to provide an article with excellent gas barrier properties and resistance to hot water formed from such gas-barrier laminate film.

As a result of research in view of the above objects, it has been found that a laminate film with excellent gas barrier properties and resistance to hot water can be produced by forming a thin, inorganic layer on a surface of a thermoplastic resin substrate film, applying a coating liquid containing a composite polymer formed by at least partial polycondensation of a metal alkoxide or its hydrolyzate and an ethylene-vinyl alcohol copolymer by a sol-gel method to the thin, inorganic layer, and subjecting the resultant composite polymer layer to a heat treatment, whereby the composite polymer layer is strongly adhered the thin, inorganic layer.

Thus, the gas-barrier laminate film according to the present invention comprises a composite polymer layer formed via a thin, inorganic layer on at least one surface of a thermoplastic resin substrate film, the composite polymer layer being formed by the polycondensation of a coating composition comprising a metal alkoxide or its hydrolyzate and an ethylene-vinyl alcohol copolymer.

The method for producing a gas-barrier laminate film according to the present invention comprises the steps of:
(a) forming a thin, inorganic layer on at least one surface of a thermoplastic resin substrate film;
(b) preparing a coating liquid containing a composite polymer formed by at least partial polycondensation of a metal alkoxide or its hydrolyzate and an ethylene-vinyl alcohol copolymer by a sol-gel method;
(c) coating and drying the coating liquid on the thin, inorganic layer; and
(d) subjecting the resultant composite polymer layer to a heat treatment at a temperature that is within a range of 80-150°C and lower than a melting point of the thermoplastic resin, thereby causing the composite polymer layer to bond to a surface of the thin, inorganic layer.

The formed article of the present invention is produced by forming a thin, inorganic layer before or after forming a substrate film to a desired shape, applying a coating liquid containing a composite polymer, and then heat-treating it.

### BRIEF DESCRIPTION OF THE DRAWING

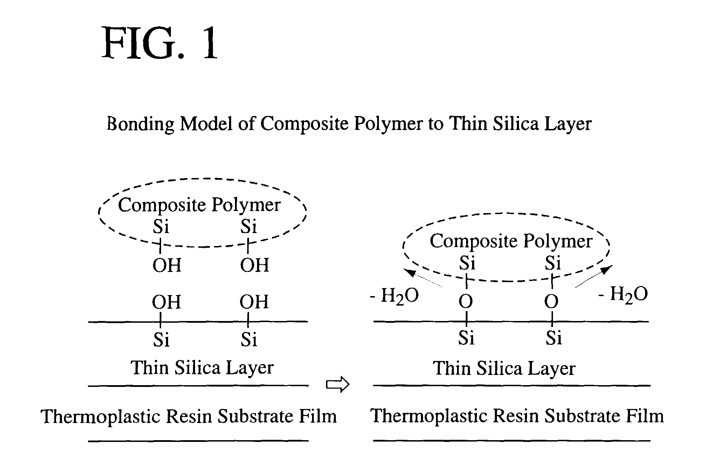

Fig. 1 is a view showing a model in which a composite polymer is bonded to a thin silica layer.

### DETAILED DESCRIPTION OF THE PREFERRED EMBODIMENTS

### [1] Gas-barrier laminate film

### (A) Thermoplastic resin substrate film

The thermoplastic resins for the substrate film are not particularly restricted, and polyesters, polyolefins, polyamides, etc. may be used alone or in combination. When two or more of them are used, they are melt-blended. Among them, polyesters are preferable because they have sufficient heat resistance and mechanical strength. Commercially available polyester films are polyethylene terephthalate (PET) films, suitable for the purpose of the present invention. The substrate films may be either unoriented films or monoaxially or biaxially oriented films. Two or more such films may be laminated.

### (B) Thin inorganic layer

A thin, inorganic layer is formed on at least one surface of the substrate film. The thin, inorganic layer is preferably (i) a thin, inorganic deposition layer, or (ii) a thin, dense, inorganic coating layer formed by a sol-gel method. The thin, inorganic deposition layer is preferably made of silica, zirconia, alumina, etc., and may be formed by a vacuum deposition method, a sputtering method, etc.

When the thermoplastic resin of the substrate film cannot withstand the deposition temperature, it is preferable to form a thin, inorganic coating layer on the substrate film. The thin, inorganic coating layer may be formed by hydrolyzing and polycondensing alkoxysilanes such as ethyl silicate, etc. and/or alkoxides of metals such as aluminum, zirconium, etc. by a sol-gel method, applying the resultant coating liquid to the substrate film and irradiating ultraviolet rays of short wavelength (172-254 nm) to the coated layer. The irradiation of ultraviolet rays partially disintegrate three-dimensional inorganic bonds at a relatively low temperature including room temperature, causing the coating layer to become denser, thus forming a thin, dense, inorganic coating layer having a similar structure to that of the thin, inorganic deposition layer. The thin, inorganic layer preferably has a thickness of about 0.1-5 µm, particularly about 0.1-1 µm. Such thin, inorganic layer makes it possible to use substrate films made of low-melting point thermoplastic resins.

### (C) Composite polymer layer

The composite polymer layer is formed from a polycondensation product of a metal alkoxide or its hydrolyzate and an ethylene-vinyl alcohol copolymer.

### (1) Metal alkoxide

The metal alkoxides, which are used in the present invention, include alkoxysilanes and/or metal alkoxides other than the alkoxysilanes. The metal alkoxides other than the alkoxysilanes are preferably zirconium alkoxides, titanium alkoxides, aluminum alkoxides, etc. Preferred combinations of the metal alkoxides contained in the composite polymer layer include (i) alkoxysilane alone, (ii) alkoxysilane + zirconium alkoxide, (iii) titanium alkoxide and/or aluminum alkoxide combined with (i) or (ii), etc.

### (a) Alkoxysilanes

The alkoxysilanes constituting the composite polymers are preferably represented by Si(OR¹)₄, wherein R¹ is a lower alkyl group having 1-6 carbon atoms. Specific examples of such alkoxysilanes include Si(OCH₃)₄, Si(OC₂H₅)₄, etc. These alkoxysilanes may be used in combination.

### (b) Zirconium alkoxides

Zirconium alkoxides are represented by Zr(OR²)₄, wherein R² is a lower alkyl group having 1-6 carbon atoms. Specific examples of such zirconium alkoxides include Zr(OCH₃)₄, Zr(OC₂H₅)₄, Zr(O-iso-C₃H₇)₄, Zr(OC₄H₉)₄, etc. These zirconium alkoxides may be used in combination. Such zirconium alkoxides are usually mixed with alkoxysilanes. The zirconium alkoxides provide the resultant laminate films with improved toughness and heat resistance, make the composite polymers denser, and prevent stretched laminate films from having decreased retorting resistance.

When the zirconium alkoxide is used together with the alkoxysilane, the amount of the zirconium alkoxide is preferably 25 parts by weight or less, more preferably 5-15 parts by weight, particularly about 13 parts by weight per 100 parts by weight of the alkoxysilane. When the amount of the zirconium alkoxide is more than 25 parts by weight, the resultant composite polymer is likely to be subjected to gelation and become brittle, whereby the composite polymer layer formed on the substrate film easily peels off.

### (c) Aluminum alkoxides

Aluminum alkoxides are represented by Al(OR³)₃, wherein R³ is a lower alkyl group having 1-6 carbon atoms. Specific examples of such aluminum alkoxides include Al(OCH₃)₃, Al(OC₂H₅)₃, Al(OC₃H₇)₃, Al(O-C₄H₉)₃, etc. These aluminum alkoxides may be used in combination. By using the aluminum alkoxides, the resultant composite polymer layer has improved heat resistance and hardness.

When the aluminum alkoxide is used together with the alkoxysilane, the amount of the aluminum alkoxide is preferably 25 parts by weight or less, more preferably 5-15 parts by weight per 100 parts by weight of the alkoxysilane. When the amount of the aluminum alkoxide exceeds 25 parts by weight, the resultant composite polymer becomes brittle, thereby making the composite polymer layer easily peel off from the substrate film.

### (d) Titanium alkoxides

Titanium alkoxides are represented by Ti(OR⁴)₄, wherein R⁴ is a lower alkyl group having 1-6 carbon atoms. Specific examples of such titanium alkoxides include Ti(OCH₃)_{4,} Ti(OC₂H₅)₄, Ti(OC₃H₇)₄, Ti(OC₄H₉)_{4,} etc. These titanium alkoxides may be used in combination. By using the titanium alkoxides, the resultant composite polymer layer has a low thermal conductivity thereby improving the heat resistance of the substrate film.

When the titanium alkoxide is used together with the alkoxysilane, the amount of the titanium alkoxide is preferably 5 parts by weight or less, more preferably 0.1-4 parts by weight, particularly about 3 part by weight per 100 parts by weight of the alkoxysilane. When the amount of the titanium alkoxide exceeds 5 parts by weight, the resultant composite polymer becomes brittle, thereby making the composite polymer layer easily peel off from the substrate film.

### (2) Ethylene-vinyl alcohol copolymer

The composite polymer further contains an ethylene-vinyl alcohol copolymer. The ethylene-vinyl alcohol copolymer may be a random copolymer of ethylene and vinyl alcohol preferably at an ethylene/vinyl alcohol molar ratio of 20/80-50/50. The inclusion of the ethylene-vinyl alcohol copolymer provides the composite polymer layer with improved gas barrier properties, water resistance and weathering resistance as well as improved resistance to hot water, making it possible to retain high gas barrier properties after hot water treatment.

The amount of the ethylene-vinyl alcohol copolymer in the composite polymer is preferably 50-3,000 parts by weight more preferably 100-2,000 parts by weight, particularly 100-800 parts by weight, per 100 parts by weight of the total metal alkoxides. When the amount of the ethylene-vinyl alcohol copolymer exceeds 3,000 parts by weight, the resultant composite polymer becomes to brittle, thereby lowering the water resistance and weathering resistance of the resultant laminate film.

### (3) Properties of composite polymer layer

Because silicon or other metal elements in the composite polymer layer are bonded via oxygen to silicon or other metal elements in the thin, inorganic layer, the composite polymer layer has sufficient adhesion to the substrate film, posing no likelihood of peeling. Such composite polymer layer preferably has a thickness of about 1-10 µm, more preferably about 1-5 µm.

### [2] Production of gas-barrier laminate film

The production process of the gas-barrier laminate film of the present invention comprises the steps of (a) forming a thin, inorganic layer on at least one surface of a thermoplastic resin substrate film; (b) preparing a coating liquid containing a composite polymer formed by at least partial polycondensation of a metal alkoxide or its hydrolyzate and an ethylene-vinyl alcohol copolymer by a sol-gel method; (c) coating and drying the coating liquid on the thin, inorganic layer; and (d) subjecting the resultant composite polymer layer to a heat treatment at a temperature that is within a range of 80-150°C and lower than a melting point of the thermoplastic resin, thereby causing the composite polymer layer to bond to a surface of the thin, inorganic layer. The sol-gel method uses a sol-gel catalyst, an acid and an organic solvent.

The sol-gel catalysts usable for the polycondensation of the metal alkoxide or its hydrolyzate and an ethylene-vinyl alcohol copolymer are preferably tertiary amines substantially insoluble in water and soluble in organic solvents. The preferred sol-gel catalysts are N,N-dimethylbenzylamine, tripropylamine, tributylamine, tripentylamine, etc., and N-dimethylbenzylamine is particularly preferable. The amount of the sol-gel catalyst is preferably 0.001-1 part by weight, more preferably 0.001-0.1 part by weight, particularly 0.005 parts by weight, per 100 parts by weight of the metal alkoxide (alkoxysilane + other metal alkoxides, if any).

The method of the present invention uses an acid as a hydrolysis catalyst for alkoxysilane, etc. The acids are preferably mineral acids such as sulfuric acid, hydrochloric acid, nitric acid, etc., and organic acids such as acetic acid, tartaric acid, etc. The amount of the acid is preferably 0.001-0.05 mol, particularly about 0.01 mol, per 1 mol of the metal alkoxide (alkoxysilane + other metal alkoxides, if any).

The amount of water is preferably 0.8-2 mol, particularly 1.5 mol per 1 mol of the metal alkoxide. With water added in such an amount, the metal alkoxide is converted to a substantially linear, amorphous polymer. Further, polar groups such as OH groups partially exist in molecules of the resultant polymer, providing high coagulation energy to the polymer molecules. When more than 2 mol of water is added, however, polymers formed from the metal alkoxides are turned to spherical particles, which are further three-dimensionally cross-linked to form low-density, porous polymers, failing to improve the gas barrier properties of the substrate film. On the other hand, when the amount of water added is less than 0.8 mol, hydrolysis reaction does not proceed sufficiently.

Organic solvents used in the present invention, preferably compatible with water, are methyl alcohol, ethyl alcohol, n-propyl alcohol, isopropyl alcohol, n-butyl alcohol, etc. Because the ethylene-vinyl alcohol copolymer is preferably dissolved in a solution containing alkoxysilane, etc., the organic solvent should be properly selected, and n-propyl alcohol is particularly preferable. An ethylene-vinyl alcohol copolymer solution is commercially available under the tradename of Soanol. The amount of the organic solvent is usually 30-100 parts by weight, per 100 parts by weight of the total of the metal alkoxide, the ethylene-vinyl alcohol copolymer, the acid and the sol-gel catalyst.

According to the method of the present invention, the laminate film is formed as follows: First, a metal alkoxide, an ethylene-vinyl alcohol copolymer, a sol-gel catalyst, an acid, water and an organic solvent as described above are mixed together to form a coating liquid, in which a polycondensation reaction proceeds gradually.

Next, this coating liquid is applied to a thin, inorganic layer formed on the substrate film and dried. The polycondensation of the metal alkoxide and the ethylene-vinyl alcohol copolymer further proceeds, resulting in a composite polymer layer. Repeating this operation, a plurality of composite polymer layers are laminated on the substrate film.

Finally, the substrate film having a composite polymer layer formed and dried is subjected to a heat treatment at a temperature within a range of 80-150°C and lower than a melting point of the substrate film, for instance, about 120°C for PET, for 30 seconds to 10 minutes, to form a laminate film to which the composite polymer is strongly bonded via the thin, inorganic layer. The resultant laminate film shows excellent gas barrier properties and resistance to hot water.

### [3] Gas-barrier article

The gas-barrier article of the present invention is obtained by forming at least one composite polymer layer on a thermoplastic resin substrate film via a thin, inorganic layer, and forming the resultant laminate film to a desired shape by a proper forming means while heating, if necessary. Alternatively, a preformed substrate film may be coated with a coating liquid on at least one surface, and then dried. The article of the present invention thus obtained has excellent gas barrier properties and resistance to hot water.

### [4] Mechanism of polycondensation

The polycondensation mechanism of the metal alkoxide and the ethylene-vinyl alcohol copolymer in the present invention will be explained below, taking alkoxysilane for instance as the metal alkoxide. Alkoxysilane and other metal alkoxides are hydrolyzed in the presence of an acid as a hydrolysis catalyst. Next, protons are removed from the hydroxyl groups of the resultant hydrolyzate by the action of the sol-gel catalyst. As a result, the hydrolyzate is not only dehydrated and polycondensed to each other, but also the hydroxyl groups of the hydrolyzate are subjected to a dehydration reaction with the hydroxyl groups of the ethylene-vinyl alcohol copolymer, thereby producing a polycondensate with a three-dimensional network structure, in which inorganic portions having bonds such as Si-O-Si, Si-O-Zr, Si-O-Ti, etc. are bonded to the ethylene-vinyl alcohol copolymer. This reaction mechanism is exemplified below. 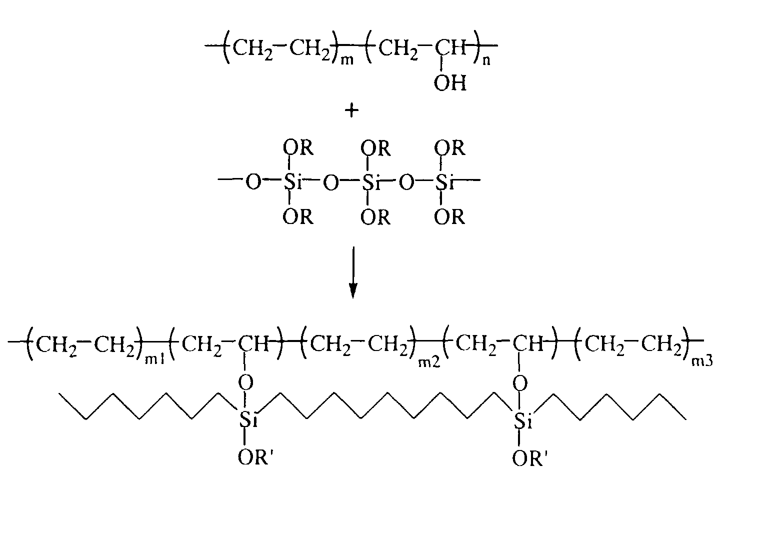 wherein R' is a hydrogen atom or an alkyl group, and m₁, m₂ and m₃ are respectively integers of 1 or more.

The above reaction proceeds at room temperature, and the viscosity of the coating liquid increases during the reaction. After applying the coating liquid to the thin, inorganic layer of the substrate film, solvents and alcohols by-produced by the polycondensation reaction are removed by heating to complete the polycondensation reaction, thereby forming a transparent composite polymer layer on the thin, inorganic layer of the substrate film. As shown in Fig. 1, hydroxyl groups of the resultant hydrolyzate are bonded to hydroxyl groups on a surface of the thin, inorganic layer (exemplified by thin silica layer) to form such bonds as Si-O-Si, which strongly adhere the composite polymer layer to the thin silica layer. Also, even if there are defects such as pinholes, fine cracks or peels in the silica deposition layer formed on the substrate film, they are filled with the composite polymer, thereby providing the laminate film with extremely high gas barrier properties. In addition, the substrate film is provided with softness due to the composite polymer.

The present invention will be described in detail referring to the following EXAMPLES without intention of limiting the present invention thereto.

### EXAMPLE 1

According to formulations listed in Table 1, an ethylene-vinyl alcohol copolymer (EVA, ethylene content: 32 mol %) was dissolved in a mixed solvent of n-propyl alcohol and deionized water to prepare a solution of Fomulation I. Also, Ethyl Silicate 40 [Si(OC₂H₅)₄, available from Colcoat, solid component: 40 weight %], n-propyl alcohol, 2-N hydrochloric acid, deionized water and N,N-dimethylbenzylamine were mixed to prepare a hydrolyzate solution of Fomulation II. The solution of Fomulation I and the hydrolyzate solution of Fomulation II were mixed and stirred to prepare a transparent coating liquid. This coating liquid was applied to a silica deposition layer on a 12-µm-thick PET substrate film by an applicator, and heat-treated at 120°C for 2 minutes in an air-circulating drier, to produce a colorless, transparent, glossy, gas-barrier laminate film with a 2-µm-thick coating layer.

This gas-barrier laminate film was measured with respect to oxygen permeability at 23°C and 90% RH by an oxygen permeability tester (OX-TRANS 2/20, available from Mocon, the U. S.), and moisture permeability at 40°C and 90%RH by a moisture permeability tester (PERMATRAN-W 3/31, available from Mocon, the U. S.). It was thus found that this gas-barrier laminate film had oxygen permeability of 0.53 cc/m²/24 hours and moisture permeability of 0.6 g/m²/24 hours. Further, this coated film was boiled in boiling water at about 95°C for 30 minutes, causing no change and leaving the coated film colorless and transparent.

**Table 1**

| Fomulation | weight % |
|---|---|
| Fomulation I | |
| EVA (Ethylene Content: 32 mol %) | 15.56 |
| n-Propyl Alcohol | 50.57 |
| Deionized Water | 31.12 |

| Fomulation II | |
|---|---|
| Ethyl Silicate 40 | 1.93 |
| n-Propyl Alcohol | 0.15 |
| HCI | 0.01 |
| Deionized Water | 0.65 |
| N,N-Dimethylbenzylamine | 0.01 |
| Total | 100.00 |

### EXAMPLE 2

A coating liquid was prepared with the formulations listed in Table 2 in the same manner as in EXAMPLE 1 except for changing the formulations to an EVA/SiO₂ weight ratio of 4:1. The resultant coating liquid was colorless and transparent. This coating liquid was applied to a silica deposition layer on a 12-µm-thick PET substrate film by an applicator, and heat-treated at 120°C for 2 minutes in an air-circulating drier, to produce a colorless, transparent, glossy, gas-barrier laminate film with a 2-µm-thick coating layer.

This gas-barrier laminate film was measured with respect to oxygen permeability and moisture permeability in the same manner as in EXAMPLE 1. It was thus found that this gas-barrier laminate film had oxygen permeability of 0.61 cc/m²/24 hours and moisture permeability of 0.7 g/m²/24 hours. Further, this coated film was boiled in boiling water at about 95°C for 30 minutes, causing no change and leaving the coated film colorless and transparent.

**Table 2**

| Fomulation | weight % |
|---|---|
| Fomulation I | |
| EVA (Ethylene Content: 32 mol %) | 14.00 |
| n-Propyl Alcohol | 45.51 |
| Deionized Water | 28.01 |

| Fomulation II | |
|---|---|
| Ethyl Silicate 40 | 8.77 |
| n-Propyl Alcohol | 0.70 |
| HCl | 0.02 |
| Deionized Water | 2.98 |
| N,N-Dimethylbenzylamine | 0.01 |
| Total | 100.00 |

### REFERENCE EXAMPLE 1

According to formulations listed in Table 3, Ethyl Silicate 40 (available from Colcoat, solid component: 40 weight %) and n-propyl alcohol were mixed at 50°C, and dropped into a mixture of 2-N hydrochloric acid and deionized water. After dropping, N,N-dimethylbenzylamine was added, and the resultant mixture was stirred for 30 minutes to cause hydrolysis and polycondensation, thereby producing a solution of an ethyl silicate hydrolyzate.

Next, this ethyl silicate hydrolyzate solution was diluted with n-propyl alcohol such that the concentration of ethyl silicate became 15 parts by weight, to prepare a silica coating liquid. This silica coating liquid was applied to a 12-µm-thick PET substrate film by an applicator, and heat-treated at 100°C for 30 seconds in an air-circulating drier while irradiating ultraviolet rays of short wavelength (254 nm) for 5 minutes, to provide the substrate film with a thin silica coating layer.

The resultant thin silica coating layer was uniform, transparent and free from cracks, having substantially the same density as that of the silica deposition layer. The thickness of the thin silica coating layer was 0.3 µm, 50% of the conventional thin silica coating layer. The thin silica coating layer had extremely improved density.

**Table 3**

| Fomulation | weight % |
|---|---|
| Ethyl Silicate 40 | 15.00 |
| n-Propyl Alcohol | 1.20 |
| HCI | 0.03 |
| Deionized Water | 1.02 |
| N,N-Dimethylbenzylamine | 0.01 |
| n-Propyl Alcohol | 82.74 |
| Total | 100.00 |

### EXAMPLE 3

The thin, dense silica coating layer formed by a sol-gel method in REFERENCE EXAMPLE 1 was coated with the same coating liquid as in EXAMPLE 1, dried and heat-treated in the same manner as in EXAMPLE 1. The resultant gas-barrier laminate film with a 2-µm-thick coating layer was colorless, transparent and glossy. This gas-barrier laminate film was measured with respect to oxygen permeability and moisture permeability in the same manner as in EXAMPLE 1. It was thus found that this gas-barrier laminate film had oxygen permeability of 0.6 cc/m²/24 hours and moisture permeability of 0.7 g/m²/24 hours. Further, this coated film was boiled in boiling water at about 95°C for 30 minutes, causing no change and leaving the coated film colorless and transparent.

### EXAMPLE 4

An alumina-deposited PET substrate film (thickness: 12 µm) was coated with the same coating liquid as in EXAMPLE 1 by an applicator, dried and heat-treated at 120°C for 2 minutes in an air-circulating drier, to produce a colorless, transparent, glossy, gas-barrier laminate film with a 2-µm-thick coating layer. Measurement of oxygen permeability at 23°C and 90% RH in the same manner as in EXAMPLE 1 revealed that it was 0.47 cc/m²/24 hours. Also, Measurement of moisture permeability at 40°C and 90% RH in the same manner as in EXAMPLE 1 revealed that it was 0.4 g/m²/24 hours. Further, this coated film was boiled in boiling water at about 95°C for 30 minutes, causing no change and leaving the coated film colorless and transparent.

### REFERENCE EXAMPLE 2

According to formulations listed in Table 4, aluminum isopropoxide (available from Wako Pure Chemical Industries, Ltd., solid component: 40 weight %) and n-propyl alcohol were mixed at 50°C, and dropped into a mixture of 10-N hydrochloric acid and deionized water. After dropping, N,N-dimethylbenzylamine was added, and the resultant mixture was stirred for 30 minutes to cause hydrolysis and polycondensation, thereby producing a solution of a hydrolyzate of aluminum isopropoxide.

Next, this hydrolyzate solution was diluted with n-propyl alcohol such that the concentration of the hydrolyzate (based on aluminum isopropoxide) became 15 parts by weight, to prepare an alumina coating liquid. This alumina coating liquid was applied to a 12-µm-thick PET substrate film by an applicator, and heat-treated at 100°C for 30 seconds in an air-circulating drier while irradiating ultraviolet rays of short wavelength (254 nm) for 5 minutes, to provide the substrate film with a thin alumina coating layer.

The resultant thin alumina coating layer was uniform, transparent and free from cracks, having substantially the same density as that of the alumina deposition layer. The thickness of the thin alumina coating layer was 0.3 µm, 50% of the conventional thin alumina coating layer. The thin alumina coating layer had extremely improved density.

**Table 4**

| Fomulation | weight % |
|---|---|
| Aluminum Isopropoxide | 17.24 |
| n-Propyl Alcohol | 1.10 |
| HCI | 0.08 |
| Deionized Water | 2.40 |
| N,N-Dimethylbenzylamine | 0.01 |
| n-Propyl Alcohol | 79.17 |
| Total | 100.00 |

### EXAMPLE 5

A dense alumina coating layer formed on a PET substrate film (thickness: 12 µm) by a sol-gel method in REFERENCE EXAMPLE 2 was coated with the same coating liquid as in EXAMPLE 1, dried and heat-treated in the same manner as in EXAMPLE 1, to produce a colorless, transparent, glossy, gas-barrier laminate film with a 2-µm-thick coating layer. The same measurement of oxygen permeability and moisture permeability as in EXAMPLE 1 revealed that this gas-barrier laminate film had oxygen permeability of 0.50 cc/m²/24 hours and moisture permeability of 0.55 g/m²/24 hours. Further, this coated film was boiled in boiling water at about 95°C for 30 minutes, causing no change and leaving the coated film colorless and transparent.

### EXAMPLE 6

A coating liquid having a formulation shown in Table 5 was prepared to form a thin, dense inorganic layer on each of a PET substrate film and an oriented polypropylene (OPP) substrate film by a sol-gel method. The resultant coating liquid was applied to each substrate film, dried and heat-treated at 100°C for 30 seconds in an air-circulating drier, while irradiating ultraviolet rays of short wavelength (254 nm) for 5 minutes, to provide each substrate film with a thin silica-zirconia coating layer. This coating layer was an extremely dense, inorganic composite polymer layer constituted by linear polymers of SiO₂ and ZrO₂, having substantially the same function as the silica deposition layer.

**Table 5**

| Fomulation | weight % |
|---|---|
| Ethyl Silicate 40 | 40.0 |
| Ethanol | 40.0 |
| Zirconium n-Butoxide | 5.0 |
| Deionized Water | 15.0 |
| Total | 100.00 |

Next, the same coating liquid as in EXAMPLE 1 was applied to the above dense, inorganic composite polymer layer, dried and heat-treated at 120°C for PET and 100°C for (OPP) each for 2 minutes in an air-circulating drier, to produce a colorless, transparent, glossy, gas-barrier laminate film with a 3-µm-thick coating layer.

Each gas-barrier laminate film was measured with respect to oxygen permeability and moisture permeability in the same manner as in EXAMPLE 1. Thus, the oxygen permeability and moisture permeability of this gas-barrier laminate film were 0.8 cc/m²/24 hours and 1.0 g/m²/24 hours, respectively in the case of the PET film, and 5.0 cc/m²/24 hours and 5.0 g/m²/24 hours, respectively in the case of the OPP film. Further, each coated film was boiled in boiling water at about 95°C for 30 minutes, causing no change and leaving the coated film colorless and transparent.

### EXAMPLE 7

According to formulations listed in Table 6, EVA was dissolved in a mixed solvent of n-propyl alcohol and deionized water to prepare an EVA solution of Fomulation I. This EVA solution was mixed with a separately prepared hydrolyzate solution of Fomulation II of Ethyl Silicate 40, zirconium n-propoxide, n-propyl alcohol, deionized water and N,N-dimethylbenzylamine and stirred to prepare a colorless, transparent barrier coating liquid. This barrier coating liquid was applied to a silica-deposited PET substrate film (thickness: 12 µm) by an applicator, and heat-treated at 120°C for 2 minutes in an air-circulating drier, to produce a colorless, transparent, glossy, gas-barrier laminate film with a 2-µm-thick coating layer.

This gas-barrier laminate film was measured with respect to oxygen permeability and moisture permeability in the same manner as in EXAMPLE 1. It was thus found that this gas-barrier laminate film had oxygen permeability of 0.50 cc/m²/24 hours and moisture permeability of 0.5 g/m²/24 hours. Further, this coated film was boiled in boiling water at about 95°C for 30 minutes, causing no change and leaving the coated film colorless and transparent.

**Table 6**

| Fomulation | weight % |
|---|---|
| Fomulation I | |
| EVA (Ethylene Content: 32 mol %) | 15.57 |
| n-Propyl Alcohol | 50.53 |
| Deionized Water | 31.01 |

| Fomulation II | |
|---|---|
| Ethyl Silicate 40 | 1.94 |
| Zirconium n-Butoxide | 0.21 |
| n-Propyl Alcohol | 0.15 |
| Deionized Water | 0.58 |
| N,N-Dimethylbenzylamine | 0.01 |
| Total | 100.00 |

As described in detail above, because the laminate films of the present invention have excellent gas barrier properties to such gases as O₂, N₂, H₂O, CO₂, etc., they are suitable as packaging films and food-wrapping films. Particularly when they are used for packages filled with gases such as N₂, CO₂, etc., their excellent gas barrier properties are extremely effective to retain the filled gas. Also, the laminate films of the present invention show excellent gas barrier properties even after a hot-water treatment, particularly a high-pressure, hot-water treatment (retorting treatment). The laminate films and their formed articles of the present invention have excellent solvent resistance, chemical resistance and weathering resistance, and good odor-retention properties that protect contents in the laminate film packages from outside smells.

Because the composite polymer layers obtained from coating liquids containing alkoxysilanes and zirconium alkoxides have good flexibility and elongation, those shaped from substrate films with such composite polymer layers can keep excellent gas barrier properties after a hot-water treatment.

The gas-barrier laminate films of the present invention having such properties are suitably formed into pouches, bags, cups, bottles, etc. as containers for retort foods.

## Claims

1. A gas-barrier laminate film comprising a composite polymer layer formed via a thin, inorganic layer on at least one surface of a thermoplastic resin substrate film, said composite polymer layer being formed by the polycondensation of a coating composition comprising a metal alkoxide or its hydrolyzate and an ethylene-vinyl alcohol copolymer.

2. The gas-barrier laminate film according to claim 1, wherein said metal alkoxide is an alkoxysilane and/or a metal alkoxide other than the alkoxysilane.

3. The gas-barrier laminate film according to claim 2, wherein said metal alkoxide other than the alkoxysilane is zirconium alkoxide.

4. The gas-barrier laminate film according to any one of claims 1-3, wherein said thin, inorganic layer is a thin, inorganic deposition layer, or a thin, dense, inorganic coating layer formed by a sol-gel method.

5. A method for producing a gas-barrier laminate film, comprising the steps of:
(a) forming a thin, inorganic layer on at least one surface of a thermoplastic resin substrate film;
(b) preparing a coating liquid containing a composite polymer formed by at least partial polycondensation of a metal alkoxide or its hydrolyzate and an ethylene-vinyl alcohol copolymer by a sol-gel method;
(c) coating and drying said coating liquid on said thin, inorganic layer; and
(d) subjecting the resultant composite polymer layer to a heat treatment at a temperature that is within a range of 80-150°C and lower than a melting point of said thermoplastic resin, thereby causing said composite polymer layer to bond to a surface of said thin, inorganic layer.

6. The method for producing a gas-barrier laminate film according to claim 5, wherein said metal alkoxide is an alkoxysilane and/or a metal alkoxide other than the alkoxysilane.

7. The method for producing a gas-barrier laminate film according to claim 6, wherein said metal alkoxide other than the alkoxysilane is zirconium alkoxide.

8. The method for producing a gas-barrier laminate film according to any one of claims 5-7, wherein said thin, inorganic layer is a thin, inorganic deposition layer, or a thin, dense, inorganic coating layer formed by a sol-gel method.

9. The method for producing a gas-barrier laminate film according to claim 8, wherein said thin, inorganic coating layer is formed by applying a solution in which a metal alkoxide is hydrolyzed and polycondensed by a sol-gel method to a surface of said substrate film, and irradiating thereto ultraviolet beams having a short wavelength of 172-254 nm.

10. An article composed of the gas-barrier laminate film recited in any one of claims 1-4.
